# FASCICULE DE BREVET EUROPEEN

(11) **EP 0 609 133 B1**
(45) Date de publication et mention de la délivrance du brevet: **22.04.1998**
(21) Numéro de dépôt: 94400151.0
(22) Date de dépôt: 25.01.1994
(51) Int. Cl.: H04N 1/028, F21V 8/00, F21S 11/00, G02B 6/00

(54) **Système d'analyse sous éclairage d'un document**
System zum Beleuchten und Abtasten von Dokumenten
System for illuminating and scanning a document

(30) Priorité: 28.01.1993 FR 9300859
(43) Date de publication de la demande: 03.08.1994
(73) Titulaire: SOCIETE D'APPLICATIONS GENERALES D'ELECTRICITE ET DE MECANIQUE S A G E M, F-75783 Paris Cedex 16 (FR)
(72) Inventeur: Metais, Derry, F-95650 Genicourt (FR)
(74) Mandataire: Bloch, Gérard

(56) Documents cités:
- EP-A- 0 442 699
- FR-A- 2 570 164
- US-A- 4 460 939
- US-A- 5 128 846
- TECHNISCHE RUNDSCHAU, no.36, 2 Septembre 1988, BERN CH page 15 'Kunststoff Sammelt Licht'

## Description

Dans un télécopieur, par exemple, on trouve un bloc d'émission comprenant une tête de lecture, ou d'analyse, ou scanner, comportant généralement une barrette CCD (charge coupled device) pour l'analyse, à travers une optique de focalisation, d'un document dont le contenu est à émettre, ou télécopier. Le document à analyser, à cet effet, doit être éclairé par une barrette lumineuse, ou l'équivalent, éclairant, au cours du défilement du document, chacune de ses lignes les unes après les autres. L'intensité de cette barrette lumineuse, qui devrait être homogène, à titre indicatif, est d'environ 800 à 1000 lux.

Ce problème de l'éclairage d'un document à analyser, en réalité, n'est pas propre aux télécopieurs. Sont concernés tous les systèmes de lecture de documents, comme les scanners en général et autres lecteurs par exemple de cartes, bref, tous les systèmes destinés à recevoir intérieurement un document à analyser et dont l'intérieur est soustrait à l'éclairage ambiant.

Pour la réalisation des barrettes lumineuses, on utilisait jusqu'à maintenant des tubes fluorescents, des barrettes de diodes électroluminescentes (LED) et autres sources de ces types. Mais elles sont d'un coût élevé, difficiles à implanter et à alimenter et de durée de vie limitée.

La demanderesse a donc cherché à s'en affranchir, en voulant faire pénétrer la lumière ambiante à l'intérieur des sytèmes, c'est-à-dire en cherchant à utiliser cette lumière ambiante pour l'éclairage du document à analyser.

On utilise fréquemment, dans diverses industries, des plaques en polyméthacrylate, du type de celle de la marque protégée Plexiglas, par exemple, qui sont transparentes, incolores et robustes. Parmi ces plaques, celles en polyméthacrylate de méthyle (PMMA) sont utilisées pour capter la lumière par une tranche et la drainer intérieurement vers une autre tranche. Ces plaques, à captage de lumière par la tranche, et qui ne la captent pratiquement pas par les faces, nécessitent évidemment que la tranche de captage, en raison de sa surface limitée, soit illuminée par une source de lumière artificielle proche.

On trouve encore dans le commerce des plaques de PMMA chargées de pigments fluorescents, par exemple de la marque Lisa, protégée au nom de la société Bayer. Elles ont la particularité de pouvoir capter la lumière par les faces, donc par des surfaces beaucoup plus étendues, et de la drainer vers les tranches en l'y restituant sous forte intensité. Plus précisément encore, les charges pigmentaires assurent une fonction de conversion aussi bien en direction qu'en longueur d'onde, si bien que des rayons ultraviolet, par exemple, y sont convertis en lumière visible, d'où la restitution sous forte intensité. Naturellement, avec de telles plaques de PMMA chargées de pigments fluorescents, il n'est nullement besoin, en raison de la surface de captage, de disposer d'une source d'illumination.

Par le document FR-A-2 570 164, on connait un système, dont l'intérieur est soustrait à l'éclairage ambiant, qui peut être agencé pour recevoir intérieurement, sur un support, un document à analyser sous éclairage, et qui est associé à une plaque de polyméthacrylate de méthyle chargée de pigments fluorescents dont une première partie s'étend à l'extérieur du système pour capter la lumière ambiante par une face et dont une seconde partie plonge à l'intérieur du système, avec une tranche tournée vers le support de document pour l'éclairage du document.

Toutefois, le système de cet art antérieur, qui ne concerne qu'un abri enterré, ne traite pas le problème qui peut se poser quand l'éclairage ambiant extérieur n'est pas suffisant. Et c'est ce problème que l'invention de la présente demande vise à résoudre.

A cet effet, l'invention concerne un système, dont l'intérieur d'un châssis est soustrait à l'éclairage ambiant, qui est destiné à recevoir intérieurement au châssis, sur un support, un document à analyser sous éclairage et qui comporte une plaque de polyméthacrylate de méthyle chargée de pigments fluorescents dont une première partie s'étend à l'extérieur du châssis pour capter la lumière ambiante par une face et dont une seconde partie plonge à l'intérieur du châssis, avec une tranche tournée vers le support de document pour l'éclairage du document, la partie de plaque extérieure au châssis comportant une face tournée vers le châssis et une face opposée au châssis et par laquelle elle capte la lumière ambiante, il est prévu, à l'intérieur du châssis, une source lumineuse d'appoint et le châssis est agencé pour que la partie de plaque extérieure au châssis puisse capter la lumière de la source d'appoint par sa face tournée vers le châssis.

La plaque de PMMA chargée capte donc l'énergie lumineuse ambiante pour la concentrer sous forte intensité sur le document à analyser par une tranche qui se comporte alors comme une barrette lumineuse de l'art antérieur. L'homogénéité d'une telle barrette est vraiment assurée.

En cas d'éclairage ambiant extérieur insuffisant, la source interne d'appoint, alors mise sous tension, complète avantageusement cet éclairage extérieur, la plaque de polyméthacrylate de méthyle redistribuant linéairement la lumière intérieure de la source d'appoint.

Un tel éclairage, avec une source d'appoint de très faible coût, est globalement d'un coût peu élevé, de mise en oeuvre simple et a une durée de vie très longue.

Naturellement, la partie de la plaque s'étendant à l'extérieur du chassis sera de préférence beaucoup plus étendue que la partie restante qui plonge à l'intérieur du châssis.

Avantageusement, les tranches de la plaque, autres que la tranche interne d'éclairage peuvent être recouvertes d'un revêtement de blocage, comme une peinture réfléchissante blanche ou miroir, pour éviter les pertes d'énergie.

De préférence encore, le système comporte un capteur CCD d'analyse de document agencé pour corriger les fluctuations d'intensité de la lumière ambiante.

L'invention sera mieux comprise à l'aide de la description suivante d'une de ses applications intéressantes, sous forme d'un télécopieur, en référence au dessin annexé, sur lesquel :
- la figure 1 représente une vue simplifiée en coupe du télécopieur de l'invention, sous éclairage ambiant normal ;
- la figure 2 représente une vue en perspective de la plaque d'éclairage du télécopieur de la figure 1 et
- la figure 3 représente une vue simplifiée en coupe du télécopieur de la figure 1, sous éclairage ambiant insuffisant.

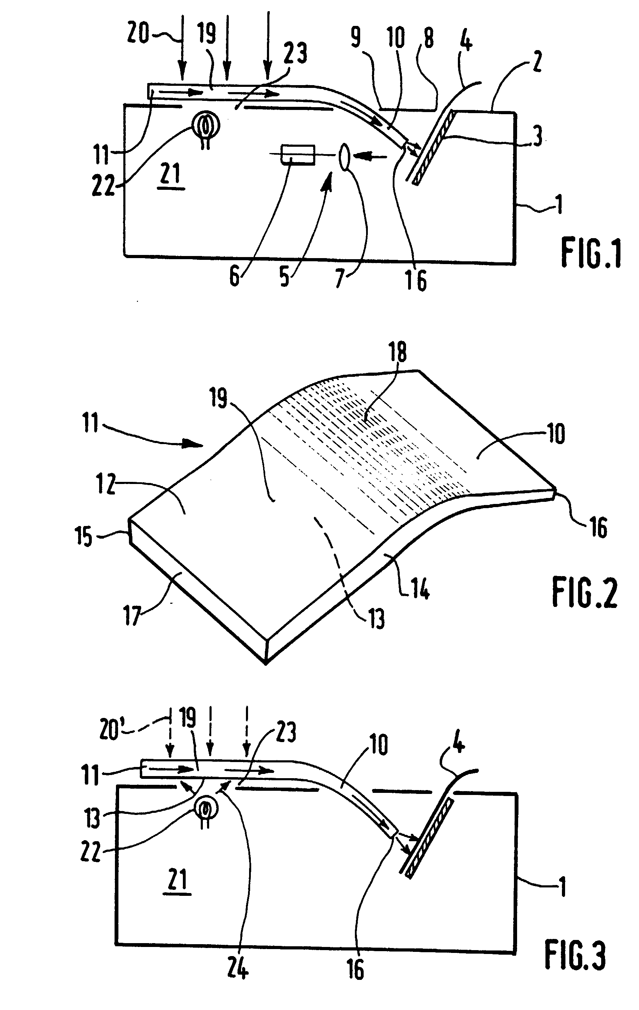

Le télécopieur de la figure 1 comporte un châssis 1, avec un capot 2, et, à l'intérieur du châssis 1, un support 3 de réception d'un document 4 à analyser, un bloc d'émission 5, avec un capteur 6, ici un capteur CCD, et une optique de focalisation 7, et une source interne d'appoint 22. Ces éléments sont parfaitement classiques, tout comme tous les autres qui n'ont donc pas besoin d'être décrits ni même présentés.

Le capot 2 est percé de trois ouvertures, l'une 8, classique, pour l'introduction des documents à télécopier, une deuxième 9, propre à l'invention, pour le passage d'une partie 10 d'une plaque d'éclairage 11, et une troisième 23, également propre à l'invention, pour l'éclairage par la source d'appoint 22.

La plaque 11 est une plaque en polyméthacrylate de méthyle (PMMA) chargée de pigments fluorescents. Elle a été sortie de moule. C'est une plaque de relativement faible épaisseur qui présente deux faces étendues parallèles 12, 13 réunies par des tranches longitudinales 14, 15 et transversales 16, 17 avec une légère pliure, non franche, le long d'une zone 18 s'étendant parallèlement aux tranches transversales 16, 17 qui sépare la plaque en deux parties, l'une 10, et l'autre 19, beaucoup plus étendue.

Les tranches 14, 15, 17 de la plaque 11 sont revêtues d'une couche réfléchissante pour conserver l'énergie lumineuse à l'intérieur de la plaque.

La partie 19 de la plaque 11 s'étend à l'extérieur du châssis du télécopieur 1, ici sensiblement parallèlement au capot 2, tandis que l'autre partie 10 plonge à l'intérieur pour que sa tranche transversale 16 soit tournée vers le support 3, à une relativement faible distance de celui-ci.

Le télécopieur est disposé dans un local éclairé et reçoit donc une lumière ambiante, illustrée, sur la figure 1, par des rayons 20. Par contre, l'intérieur 21 du télécopieur est soustrait à cet éclairage ambiant.

Toutefois, la partie 19 de la plaque 11 reçoit, par sa face 12, opposée au châssis 1, les rayons 20 qui sont captés et drainés vers la partie 10 de la plaque pour en sortir par la tranche 16 éclairant ainsi le support 3 ou le document 4 après son introduction. Quand cette lumière ambiante est suffisante, la source 22 n'est pas mise sous tension (figure 1).

Il peut arriver que la lumière ambiante du local dans lequel est disposé le télécopieur ne soit pas suffisante pour éclairer parfaitement le support 3 ou le document à analyser 4.

C'est pourquoi on peut mettre la source d'éclairage d'appoint 22 sous tension (figure 3).

La source interne d'appoint 22, qui peut être une ampoule classique, est de très faible coût, en tout cas sans commune mesure avec celui des barrettes lumineuses d'éclairage de document de l'art antérieur.

La troisième ouverture 23 percée dans le capot 2 est destinée à l'éclairage, par la source 22, de la partie 19 de la plaque 11, non pas par sa face 12 opposée au châssis l,mais par sa face 13 tournée vers le châssis 1.

Il faut bien remarquer que, en cas d'éclairage supplémentaire par la source d'appoint 22, le principe de l'éclairage indirect du document à analyser par la lumière ambiante n'est pas remis en cause. L'intérieur 21 du télécopieur reste soustrait à l'éclairage ambiant. Celui-ci n'illumine plus que faiblement (20') la plaque de PMMA qui, par son autre face 13, capte les rayons 24 de la source interne d'appoint 22 et les draine vers la même tranche d'éclairage 16.

La source 22 émet une lumière qui est redistribuée linéairement par la plaque 11 à travers la tranche transversale 16. En d'autres termes, la lumière de la source 22 subit, à travers la plaque 11, une conversion géométrique.

## Revendications

1. Système, dont l'intérieur (21) d'un châssis (1) est soustrait à l'éclairage ambiant, qui est destiné à recevoir intérieurement au châssis (1), sur un support (3), un document (4) à analyser sous éclairage et qui comporte une plaque (11) de polyméthacrylate de méthyle chargée de pigments fluorescents dont une première partie (19) s'étend à l'extérieur du châssis (1) pour capter la lumière ambiante (20 ; 20') par une face (12) et dont une seconde partie (10) plonge à l'intérieur (21) du châssis (1), avec une tranche (16) tournée vers le support de document (3) pour l'éclairage du document (4), la partie de plaque (19) extérieure au châssis (1) comportant une face (13) tournée vers le châssis (1) et une face (12) opposée au châssis (1) et par laquelle elle capte la lumière ambiante (20'), il est prévu, à l'intérieur (21) du châssis (1), une source lumineuse d'appoint (22) et le châssis (1) est agencé (23) pour que la partie de plaque (19) extérieure au châssis (1) puisse capter la lumière de la source d'appoint (22) par sa face (13) tournée vers le châssis (1).

2. Système selon la revendication 1, dans lequel la première partie de plaque (19) s'étendant à l'extérieur du châssis (1) est plus étendue que la seconde partie de plaque (10) plongeant à l'intérieur (21) du châssis (1).

3. Système selon l'une des revendications 1 et 2, dans lequel les tranches (14,15,17) de la plaque (11) autres que la tranche d'éclairage (16) sont pourvues d'un revêtement de blocage contre les pertes d'énergie lumineuse.

4. Système selon l'une des revendications 1 à 3, dans lequel est prévu un capteur CCD (6) d'analyse de document corrigeant les fluctuations d'intensité de la lumière ambiante.

## Patentansprüche

1. System, bei dem das Innere (21) eines Gehäuses (1) dem Umgebungslicht entzogen ist, und das dazu bestimmt ist, im Inneren des Gehäuses (1) auf einem Träger (3) ein unter Beleuchtung zu analysierendes Dokument aufzunehmen, und das eine Platte (11) aus mit fluoreszierenden Pigmenten beladenem Polymethylmethacrylat aufweist, von der ein erster Bereich (19) sich außerhalb des Gehäuses (1) erstreckt, um das Umgebungslicht (20; 20') mit der einen Seite (12) aufzufangen, und von der ein zweiter Bereich (10) in das Innere (21) des Gehäuses (1) eintritt, wobei die eine Schnittkante (16) zur Beleuchtung des Dokumentes (4) dem Träger (3) des Dokumentes zugewandt ist, wobei der außerhalb des Gehäuses (1) befindliche Plattenbereich (19) eine dem Gehäuse (1) zugewandte Seite (13) und eine dem Gehäuse (1) entgegengesetzte Seite (12) aufweist, mit der er das Umgebungslicht (20') auffängt, wobei im Inneren (21) des Gehäuses (1) eine Zusatzlichtquelle (22) vorgesehen ist und das Gehäuse (1) so ausgebildet (23) ist, daß der außerhalb des Gehäuses (1) befindliche Plattenbereich (19) über seine dem Gehäuse (1) zugewandte Seite (13) das Licht der Zusatzlichtquelle (22) auffangen kann.

2. System nach Anspruch 1,
bei dem der erste Plattenbereich (19), der sich außerhalb des Gehäuses (1) erstreckt, eine größere Ausdehnung als der zweite Plattenbereich (10) hat, der in das Innere (21) des Gehäuses (1) eintritt.

3. System nach einem der Ansprüche 1 und 2,
bei dem die Schnittkanten (14, 15, 17) der Platte (11), mit Ausnahme der Beleuchtungs-Schnittkante (16) mit einer Blockierungsbeschichtung gegen Lichtenergieverluste versehen sind.

4. System nach einem der Ansprüche 1 bis 3,
bei dem ein CCD-Fühler (6) zur Dokumentenanalyse vorgesehen ist, der die Schwankungen der Intensität des Umgebungslichtes korrigiert.

## Claims

1. System, of which the interior (21) of a casing (1) is shielded from ambient light, which is intended to receive on the inside of the casing (1), on a support (3), a document (4) to be analysed under illumination, and which comprises a plate (11) of polymethylmethacrylate including fluorescent pigments of which a first part (19) extends outside the casing (1) to capture ambient light (20; 20') by means of a face (12) and of which a second part (10) passes into the inside (21) of the casing (1), with an edge (16) turned towards the document support (3) for illumination of the document (4), the plate part (19) outside the casing (1) comprising a face (13) turned towards the casing (1) and a face (12) opposite to the casing (1) and by means of which it captures the ambient light (20'), an additional light source (22) is provided on the inside (21) of the casing (1) and the casing (1) is arranged (23) so that the plate part (19) outside the casing (1) can capture the light from the additional light source (22) by its face (13) turned towards the casing (1).

2. System according to claim 1, wherein the first part of the plate (19) extending outside the casing (1) is more extensive than the second part of the plate (10) passing into the inside (21) of the casing (1).

3. System according to one of claims 1 and 2, wherein the edges (14, 15, 17) of the plate (11) other than the illumination edge (16) are provided which a blocking covering to prevent losses of light energy.

4. System according to one of claims 1 to 3, wherein a CCD sensor (6) is provided for document analysis correcting fluctuations in ambient light intensity.
